# EUROPEAN PATENT APPLICATION

(11) **EP 4 675 431 A1**
(43) Date of publication of application: **07.01.2026**
(21) Application number: 24895993.4
(22) Date of filing: 30.09.2024
(51) Int. Cl.: G06F 9/50

(54) **MEMORY MANAGEMENT METHOD FOR COMPUTING INTEGRATED CIRCUIT, APPARATUS AND COMPUTING INTEGRATED CIRCUIT**

(30) Priority: 29.11.2023 CN 202311608735
(71) Applicant: Suzhou Metabrain Intelligent Technology Co., Ltd., Suzhou, Jiangsu 215000 (CN)
(72) Inventor: ZHANG, Rongguo, Suzhou, Jiangsu 215000 (CN)
(74) Representative: Michalski Hüttermann & Partner Patentanwälte mbB
(86) International application number: PCT/CN2024/122643
(87) International publication number: WO 2025/112899

(57) **Abstract**

The present application relates to the technical field of artificial intelligence. Disclosed are a memory management method for a computing integrated circuit, an apparatus and a computing integrated circuit. The method comprises: acquiring a memory application request of a current thread; according to the size of an applied memory of the memory application request, determining a target memory allocation mode; if the target memory allocation mode is a first allocation mode, using a thread memory pool of the current thread to allocate to the current thread a memory space corresponding to the memory application request; and if the target memory allocation mode is a second allocation mode, acquiring a mutual exclusion lock of the target memory pool corresponding to the current thread, and using the target memory pool to allocate to the current thread a memory space corresponding to the memory application request. The present application uses a thread memory pool of each thread to process a memory request for a smaller memory without the need of acquiring a mutual exclusion lock, thus improving the memory application and release performance of computing integrated circuits; in addition, only a thread memory pool used by a memory request for a smaller memory is processed, thus reducing the waste of memory resources in computing integrated circuits.

## Description

### CROSS-REFERENCE TO RELATED APPLICATION

The present disclosure claims the priority of Chinese patent application filed on November 29, 2023 before the CNIPA, China National Intellectual Property Administration with the application number of 202311608735.8, which is incorporated herein in its entirety by reference.

### FIELD

The present disclosure relates to the field of artificial intelligence (AI) technologies, and in particular to a memory management method and apparatus for a computing integrated circuit, and a computing integrated circuit.

### BACKGROUND

With the rise of artificial intelligence (Al) technologies, a solution of using a central processing unit (CPU) and graphics processing units (GPUs) or the CPU and other computing integrated circuits for AI model training and reasoning is widely used in various industries. Since memory management optimization technologies can reduce the time of computing memory application and release by using memory blocks in a memory pool, and thus the memory management optimization technologies have been widely used in computing integrated circuits.

In the related art, memory management optimization for a computing integrated circuit is either to access a single memory pool by multiple threads or to use its own memory pool for each thread. However, the solution of accessing the single memory pool by multiple threads needs to set a mutex lock to maintain the consistency of data in the memory pool, so that when a large number of threads need to apply for or release memory at the same time, only one thread can obtain the mutex lock, and other threads can only be in a waiting state, which will seriously affect the performance of the computing integrated circuit. For the solution of using its own memory pool for each thread, a certain number of memory blocks are cached in each memory pool for their own threads, which leads to the whole program occupying a large amount of memory in the computing integrated circuit, thereby causing a waste of memory resources.

### SUMMARY

The present disclosure provides a memory management method for a computing integrated circuit, including:
obtaining a memory application request of a current thread, where the current thread is any thread of a computing integrated circuit;
determining a target memory allocation mode according to an applied memory size of the memory application request;
in response to determining that the target memory allocation mode is a first allocation mode, allocating a memory space corresponding to the memory application request for the current thread by using a thread memory pool of the current thread, where the computing integrated circuit is provided with a thread memory pool for each thread; or
in response to determining that the target memory allocation mode is a second allocation mode, obtaining a mutex lock corresponding to a current thread of a target memory pool, and allocating the memory space corresponding to the memory application request for the current thread by using the target memory pool, where the target memory pool is a preset memory pool corresponding to the applied memory size, and the applied memory size corresponding to the target memory pool is greater than an applied memory size corresponding to the thread memory pool.

In some embodiments, allocating the memory space corresponding to the memory application request for the current thread by using the thread memory pool of the current thread includes:
obtaining a target memory block from the thread memory pool of the current thread, where the target memory block is an idle preset memory block corresponding to the applied memory size of the memory application request; and
allocating the target memory block to the current thread.

In some embodiments, obtaining the target memory block from the thread memory pool of the current thread includes:
obtaining the target memory block from the thread memory pool of the current thread by using a thread memory management instance of the current thread.

In some embodiments, the thread memory pool of the current thread includes preset memory blocks with various preset sizes, and the target memory block is an idle preset memory block with a preset size corresponding to the applied memory size of the memory application request in the thread memory pool of the current thread.

In some embodiments, obtaining the target memory block from the thread memory pool of the current thread includes:
determining a target array index according to the applied memory size of the memory application request, where the thread memory pool of the current thread includes an idle memory block array, the idle memory block array includes array elements with array indexes corresponding to the various preset sizes, each of the array elements is a memory block linked list of the idle preset memory block with the preset size corresponding to the array index of the array element, and the target array index is any array index corresponding to the preset size; and
searching the target memory block from the memory block linked list of the target array index.

In some embodiments, obtaining the target memory block from the thread memory pool of the current thread includes:
determining whether the target memory block exists in the thread memory pool of the current thread; and
in response to determining that the target memory block does not exist in the thread memory pool of the current thread, obtaining a mutex lock corresponding to a current thread of a shared memory pool, and obtaining the target memory block from the shared memory pool.

In some embodiments, obtaining the target memory block from the shared memory pool includes:
determining whether the target memory block exists in the shared memory pool;
in response to determining that the target memory block does not exist in the shared memory pool and the target memory interval exists in the shared memory pool, obtaining the target memory block by dividing the target memory interval; in response to determining that the target memory interval does not exist in the shared memory pool, obtaining a mutex lock corresponding to a current thread of a page cache pool, allocating a target page from the page cache pool to the shared memory pool, and taking the target page as the memory interval of the shared memory pool, where the target page is an idle preset page space corresponding to a memory size of the target memory block, and the target memory interval is any memory interval in the shared memory pool that is greater than or equal to the memory size of the target memory block.

In some embodiments, the page cache pool includes preset page spaces with multiple preset page space sizes, the preset page space sizes include the preset memory page size to n preset memory page sizes in increments of the preset memory page size, and allocating the target page from the page cache pool to the shared memory pool includes:
determining whether idle preset page spaces greater than or equal to the target memory block exist in the page cache pool;
in response to determining that the idle preset page spaces greater than or equal to the target memory block exist in the page cache pool, selecting a minimum idle preset page space greater than or equal to the target memory block as the target page, and allocating the target page to the shared memory pool; or
in response to determining that the idle preset page spaces greater than or equal to the target memory block do not exist in the page cache pool, applying for a memory space with a preset memory application size from remaining memory of the computing integrated circuit, dividing the target memory block from the memory space with the preset memory application size to the shared memory pool, and putting a remaining memory space in the memory space with the preset memory application size into the page cache pool, where the preset memory application size is greater than or equal to the n preset memory page sizes.

In some embodiments, the preset sizes include 8 bytes to 128 bytes in increments of 8 bytes, 144 bytes to 1024 bytes in increments of 16 bytes, 1152 bytes to 8192 bytes in increments of 128 bytes, and 9216 bytes to 65536 bytes in increments of 1024 bytes, and determining the target memory allocation mode according to the applied memory size of the memory application request includes:
determining whether the applied memory size of the memory application request is greater than a first size threshold, where the first size threshold is 65536 bytes;
in response to determining that the applied memory size of the memory application request is not greater than the first size threshold, determining that the target memory allocation mode is the first allocation mode; or
in response to determining that the applied memory size of the memory application request is greater than the first size threshold, determining that the target memory allocation mode is the second allocation mode.

In some embodiments, the preset memory pool includes a first memory pool and a second memory pool, and before obtaining the mutex lock corresponding to the current thread of the target memory pool, the method further includes:
determining whether the applied memory size of the memory application request is greater than a second size threshold;
in response to determining that the applied memory size of the memory application request is not greater than the second size threshold, determining the first memory pool as the target memory pool; or
in response to determining that the applied memory size of the memory application request is greater than the second size threshold, determining the second memory pool as the target memory pool, where an applied memory size corresponding to the second memory pool is greater than an applied memory size corresponding to the first memory pool.

In some embodiments, in the case where the target memory pool is the first memory pool, allocating the memory space corresponding to the memory application request for the current thread by using the target memory pool includes:
determining a target memory size according to the applied memory size of the memory application request, where the target memory size is a product of a result of rounding up a quotient of the applied memory size of the memory application request and a third size threshold and the third size threshold;
determining whether idle memory blocks greater than or equal to the target memory size exist in the target memory pool;
in response to determining that the idle memory blocks greater than or equal to the target memory size exist in the target memory pool, allocating the smallest memory block in the idle memory blocks greater than or equal to the target memory size in the target memory pool to the current thread;
in response to determining that the idle memory blocks greater than or equal to the target memory size do not exist in the target memory pool, determining whether a memory space with a target application size exists in remaining memory of the computing integrated circuit, where the target application size is a maximum value between a quotient of the remaining memory of the computing integrated circuit and a preset value and the target memory size, and the preset value is greater than 1; and
in response to determining that the memory space with the target application size exists in remaining memory of the computing integrated circuit, applying for the memory space with the target application size from the remaining memory of the computing integrated circuit, dividing a memory space with the target memory size from the memory space with the target application size and allocating the memory space with the target memory size to the current thread, and putting a remaining memory space divided from the memory space with the target application size into the target memory pool.

In some embodiments, in the case where the target memory pool is the second memory pool, allocating the memory space corresponding to the memory application request for the current thread by using the target memory pool includes:
determining whether idle memory blocks greater than or equal to the target memory size exist in the target memory pool;
in response to determining that the idle memory blocks greater than or equal to the target memory size exist in the target memory pool, allocating the smallest memory block in the idle memory blocks greater than or equal to the target memory size in the target memory pool to the current thread;
in response to determining that the idle memory blocks greater than or equal to the target memory size do not exist in the target memory pool, determining whether the memory space with the target memory size exists in remaining memory of the computing integrated circuit;
in response to determining that the memory space with the target memory size does not exist in remaining memory of the computing integrated circuit, controlling the first memory pool and the second memory pool to release their respective complete memory spaces, where the complete memory space is a whole idle memory space previously applied to the computing integrated circuit;
in response to determining that the memory space with the target memory size exists in the remaining memory of the computing integrated circuit, applying for the remaining memory of the computing integrated circuit, and determining whether a difference between a memory size of the remaining memory and the target memory size is greater than or equal to the second size threshold;
in response to determining that the difference between the memory size of the remaining memory and the target memory size is greater than or equal to the second size threshold, dividing the memory space with the target memory size from the remaining memory and allocating the memory space with the target memory size to the current thread, and putting a remaining memory space divided from the remaining memory into the target memory pool; or
in response to determining that the difference between the memory size of the remaining memory and the target memory size is less than the second size threshold, allocating the remaining memory to the current thread.

In some embodiments, the method further includes:
obtaining a memory release request of the current thread;
determining the target memory allocation mode according to a released memory size of the memory release request;
in response to determining that the target memory allocation mode is the first allocation mode, releasing a memory space corresponding to a memory pointer to the thread memory pool of the current thread according to the memory pointer in the memory release request; or
in response to determining that the target memory allocation mode is the second allocation mode, obtaining the mutex lock corresponding to the current thread of the target memory pool, and releasing the memory space corresponding to the memory pointer to a target release memory pool according to the memory pointer in the memory release request, where the target release memory pool is a preset memory pool corresponding to the released memory size, and the released memory size corresponding to the target release memory pool is greater than a released memory size corresponding to the thread memory pool.

In some embodiments, after releasing the memory space corresponding to the memory pointer to the target release memory pool, the method further includes:
determining whether the memory space corresponding to the memory pointer in the target release memory pool is a divided memory space; and
in response to determining that the memory space corresponding to the memory pointer in the target release memory pool is the divided memory space, recursively searching and merging idle memory spaces adjacent to the memory space corresponding to the memory pointer in the target release memory pool.

In some embodiments, after the step of obtaining the memory release request of the current thread, the method further includes:
releasing a memory of the current thread through a thread memory management instance of the current thread.

In some embodiments, the step of releasing the memory of the current thread through the thread memory management instance of the current thread includes:
determining whether a number of idle memory blocks in the thread memory pool corresponding to the current thread exceeds a preset number; and
in response to the number of idle memory blocks in the thread memory pool corresponding to the current thread exceeding the preset number, returning one or more preset idle memory blocks to the shared memory pool.

In some embodiments, after determining the target memory allocation mode according to the applied memory size of the memory application request, the method further includes:
forwarding the target memory allocation mode to a corresponding memory allocator to enable a thread memory pool in the corresponding memory allocator to process the memory application request.

In some embodiments, obtaining the target memory block from the shared memory pool includes:
determining whether the target memory block exists in the shared memory pool; and
in response to determining that the target memory block does not exist in the shared memory pool, obtaining the target memory block through the page cache pool.

The present disclosure further provides a memory management apparatus for a computing integrated circuit, including:
an application obtaining module configured to obtain a memory application request of a current thread, where the current thread is any thread of a computing integrated circuit;
an allocation determining module configured to determine a target memory allocation mode according to an applied memory size of the memory application request;
a first application module configured to, in response to determining that the target memory allocation mode is a first allocation mode, allocate a memory space corresponding to the memory application request for the current thread by using a thread memory pool of the current thread; or
a second application module configured to, in response to determining that the target memory allocation mode is a second allocation mode, obtain a mutex lock corresponding to a current thread of a target memory pool, and allocate the memory space corresponding to the memory application request for the current thread by using the target memory pool, where the target memory pool is a preset memory pool corresponding to the applied memory size, and the applied memory size corresponding to the target memory pool is greater than an applied memory size corresponding to the thread memory pool.

In addition, the present disclosure further provides a computing integrated circuit, including:
one or more processors; and
a memory associated with the one or more processors, where the memory is configured to store computer readable instructions which, when read and executed by the one or more processors, cause the one or more processors to implement steps of the above memory management method for the computing integrated circuit.

The memory management method for the computing integrated circuit provided by the present disclosure includes: obtaining a memory application request of a current thread, where the current thread is any thread of a computing integrated circuit; determining a target memory allocation mode according to an applied memory size of the memory application request; in response to determining that the target memory allocation mode is a first allocation mode, allocating a memory space corresponding to the memory application request for the current thread by using a thread memory pool of the current thread, where the computing integrated circuit is provided with a thread memory pool for each thread; in response to determining that the target memory allocation mode is a second allocation mode, obtaining a mutex lock corresponding to a current thread of a target memory pool, and allocating the memory space corresponding to the memory application request for the current thread by using the target memory pool, where the target memory pool is a preset memory pool corresponding to the applied memory size, and the applied memory size corresponding to the target memory pool is greater than an applied memory size corresponding to the thread memory pool.

### BRIEF DESCRIPTION OF THE DRAWINGS

In order to more clearly illustrate technical solutions in the embodiments of the present disclosure or in the related art, accompanying drawings to be used in the description of the embodiments or the related art will be briefly introduced below. Obviously, the accompanying drawings in the description below are only some embodiments of the present disclosure. For a person skilled in the art, other accompanying drawings may also be obtained according to the provided accompanying drawings without paying creative labor.
FIG. 1 is a flowchart of a memory management method for a computing integrated circuit provided in an embodiment of the present disclosure.
FIG. 2 is a schematic diagram of a system architecture of another memory management method for a computing integrated circuit provided in an embodiment of the present disclosure.
FIG. 3 is a schematic diagram of a part of preset memory blocks of another memory management method for a computing integrated circuit provided in an embodiment of the present disclosure.
FIG. 4 is a schematic diagram of another part of preset memory blocks of another memory management method for a computing integrated circuit provided in an embodiment of the present disclosure.
FIG. 5 is a schematic diagram of a preset page space of another memory management method for a computing integrated circuit provided in an embodiment of the present disclosure.
FIG. 6 is a flowchart of another memory management method for a computing integrated circuit provided in an embodiment of the present disclosure.
FIG. 7 is a structural block diagram of a memory management apparatus for a computing integrated circuit provided in an embodiment of the present disclosure.
FIG. 8 is a schematic structural diagram of a computing integrated circuit provided in an embodiment of the present disclosure.
FIG. 9 is a schematic structural diagram of a computer readable storage medium provided in an embodiment of the present disclosure.

### DETAILED DESCRIPTION

In order to make the purpose, technical solutions and advantages of the embodiments of the present disclosure more clear, the technical solutions in the embodiments of the present disclosure will be clearly and completely described below with reference to the accompanying drawings in the embodiments of the present disclosure. Obviously, the described embodiments are merely a part of the embodiments of the present disclosure, rather than all of the embodiments. All of the other embodiments that a person skilled in the art obtains on the basis of the embodiments of the present disclosure without paying creative labor fall within the protection scope of the present disclosure.

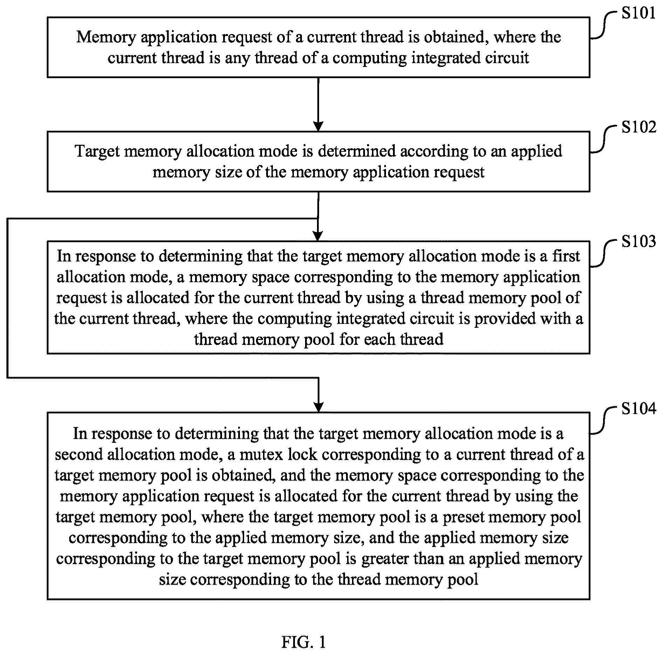

Referring to FIG. 1, FIG. 1 is a flowchart of a memory management method for a computing integrated circuit provided in an embodiment of the present disclosure. The method can include following steps.

Step 101, a memory application request of a current thread is obtained, where the current thread is any thread of a computing integrated circuit.

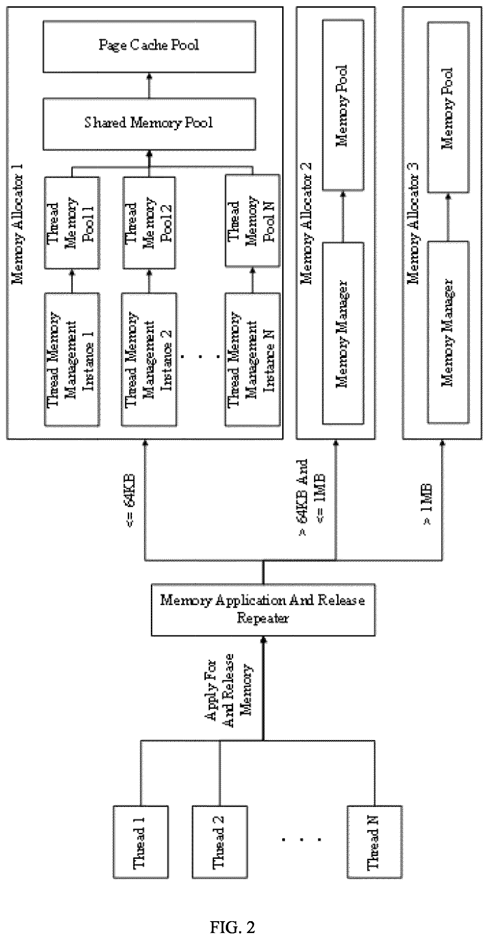

It can be understood that the current thread in the embodiment can be any thread in the computing integrated circuit, for example, a thread 1 to a thread N in FIG. 2. The memory application request in the embodiment can be a request from a thread to apply for memory. In the embodiment, the processing of a memory application request for any thread in the computing integrated circuit is taken as an example. The processing of other memory application requests for the thread and the processing of memory application requests for other threads in the computing integrated circuit, for example, parallel processing of memory application requests for multiple threads, can be realized in the same or similar way as the method provided in the embodiment, and the embodiment does not impose any restrictions on this.

Correspondingly, the way for the computing integrated circuit to obtain the memory application request of the current thread in the embodiment can be set by the designer according to practical scenarios and user needs. For example, it can be realized in the same or similar way as the memory management method for the computing integrated circuit in related art. As shown in FIG. 2, the computing integrated circuit can use a memory application and release repeater to obtain an applied memory size of the memory application request of the thread, determine a corresponding memory allocation mode, and forward the memory application request to a corresponding memory allocator (that is, a memory allocator 1 to a memory allocator 3) for processing.

Step 102, a target memory allocation mode is determined according to an applied memory size of the memory application request.

The applied memory size in the embodiment can be a memory size requested by the memory application request. The target memory allocation mode in the embodiment can be a memory allocation mode used for processing the memory application request. The target memory allocation mode can be a first allocation mode using a thread memory pool of a current thread for processing or a second allocation mode using a target memory pool for processing.

Correspondingly, the way in which the computing integrated circuit determines the target memory allocation mode according to the applied memory size of the memory application request in this step can be set by the designer. For example, in response to determining that the applied memory size (that is, a size of the applied memory) is less than or equal to a first threshold, the computing integrated circuit determines that the target memory allocation mode is the first allocation mode; and in response to determining that the applied memory size is greater than the first threshold, the computing integrated circuit determines that the target memory allocation mode is the second allocation mode. As shown in FIG. 2, when the first threshold is 64KB (kilobytes), that is, 65536 bytes, the computing integrated circuit can determine whether the applied memory size is greater than 64KB in this step; in response to determining that the applied memory size is not greater than 64KB, it is determined that the target memory allocation mode is the first allocation mode, and the memory application request is processed by using a thread memory pool (that is, a thread memory pool 1 to a thread memory pool N) in the memory allocator 1; and in response to determining that the applied memory size is greater than 64KB, it is determined that the target memory allocation mode is the second allocation mode, and the memory application request is processed by using a memory pool (that is, a preset memory pool) in the memory allocator 2 or the memory allocator 3.

Step 103, in response to determining that the target memory allocation mode is a first allocation mode, a memory space corresponding to the memory application request is allocated for the current thread by using a thread memory pool of the current thread, where the computing integrated circuit is provided with a thread memory pool for each thread.

In the embodiment, in response to determining that the target memory allocation mode corresponding to the memory application request is the first allocation mode, the computing integrated circuit allocates the memory space corresponding to the memory application request for the current thread by using the thread memory pool of the current thread, that is, allocates memory blocks with a memory size greater than or equal to the applied memory size of the memory application request from idle memory blocks (that is, the memory space) in the thread memory pool of the current thread.

Correspondingly, in the embodiment, the way in which the computing integrated circuit allocates the memory space corresponding to the memory application request for the current thread by using the thread memory pool of the current thread can be set by the designer according to practical scenarios and user needs, for example, multiple memory blocks can be set in the thread memory pool of each thread. In this step, the computing integrated circuit can obtain the target memory block from the thread memory pool of the current thread, where the target memory block is an idle preset memory block corresponding to the applied memory size of the memory application request; and allocate the target memory block to the current thread. For example, the computing integrated circuit can obtain the target memory block from the thread memory pool of the current thread by using a thread memory management instance of the current thread, and allocate the target memory block to the current thread. As shown in FIG. 2, when the current thread is the thread 1, the target memory block can be obtained from the thread memory pool 1 by using a thread memory management instance 1 in the memory allocator 1 and returned to the thread 1. That is, in the embodiment, the thread memory management instance can be created for each thread, which is responsible for memory application and release operations of the corresponding thread, and each thread memory management instance is connected to a thread memory pool; in response to receiving a memory application request, the thread memory management instance will search for an idle memory block with a suitable size in the connected thread memory pool and return the idle memory block; and in response to receiving a memory release request, the thread memory management instance will return the released memory to the connected thread memory pool. The computing integrated circuit can also divide a memory space with the applied memory size from an idle memory space in the thread memory pool of the current thread, and allocate the memory space to the current thread. The embodiment does not impose any restrictions on this.

Further, in the embodiment, memory blocks with various preset sizes (that is, preset memory blocks) can be set in the thread memory pool of the thread, and the target memory block can be an idle preset memory block with a preset size corresponding to the applied memory size of the memory application request in the thread memory pool of the current thread, for example, an idle preset memory block with the smallest preset size in preset sizes greater than or equal to the applied memory size.

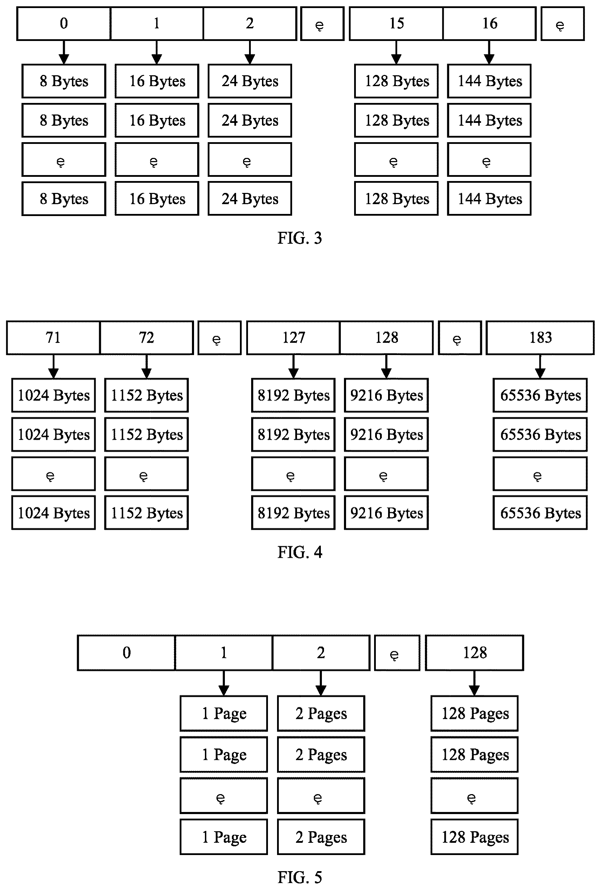

Correspondingly, the setting of preset memory blocks with various preset sizes in the thread memory pool of each thread can be set by the designer according to usage scenarios and user needs. For example, when the first threshold is 64KB (that is, 65536 bytes), the preset sizes include 8 bytes to 128 bytes in increments of 8 bytes, 144 bytes to 1024 bytes in increments of 16 bytes, 1152 bytes to 8192 bytes in increments of 128 bytes, and 9216 bytes to 65536 bytes in increments of 1024 bytes. For example, each thread memory pool can include an idle memory block array, each array element in the idle memory block array is a memory block linked list with the same memory size (that is, the preset size), and a corresponding relationship between an array index and the corresponding array element (the memory block linked list) is as follows: when the array index is in a range of [0, 15], as shown in FIG. 3, the size of the memory blocks (that is, the preset memory blocks) in the memory block linked list corresponding to the array elements increases by 8 bytes, that is, when the index is 0, the size of the memory blocks is 8 bytes; when the index is 1, the size of the memory blocks is 16 bytes; when the index is 2, the size of the memory blocks is 24 bytes; and when the index is 15, the size of the memory blocks is 128 bytes. When the array index is in a range of [16, 71], the size of the memory blocks in the memory block linked list corresponding to the array elements increases by 16 bytes, that is, when the index is 16, the size of the memory blocks is 144 bytes; when the index is 17, the size of the memory blocks is 160 bytes; and when the index is 71, the size of the memory blocks is 1024 bytes. When the array index is in a range of [72, 127], the size of the memory blocks in the memory block linked list corresponding to the array elements increases by 128 bytes, that is, when the index is 72, the size of the memory blocks is 1152 bytes; when the index is 73, the size of the memory blocks is 1280 bytes; and when the index is 127, the size of the memory blocks is 8192 bytes. When the array index is in a range of [128, 183], as shown in FIG. 4, the size of the memory blocks in the memory block linked list corresponding to the array elements increases by 1024 bytes, that is, when the index is 128, the size of the memory blocks is 9216 bytes; when the index is 129, the size of the memory blocks is 10240 bytes; and when the index is 183, the size of the memory blocks is 65536 bytes (that is, 64KB). When applying for memory less than or equal to 64KB, the thread memory pool is mapped to the corresponding array index according to the memory size transmitted by the thread memory management instance, and an idle memory block with the array index is found and returned.

That is, the process of obtaining the target memory block from the thread memory pool of the current thread can include: determining a target array index according to the applied memory size of the memory application request, where the thread memory pool of the current thread includes an idle memory block array, the idle memory block array includes array elements with array indexes corresponding to the various preset sizes, each of the array elements is a memory block linked list of the idle preset memory block with the preset size corresponding to the array index of the array element, and the target array index is any array index corresponding to the preset size; and searching the target memory block from the memory block linked list of the target array index.

Further, in the process of obtaining the target memory block from the thread memory pool of the current thread, in the case where the target memory block does not exist in the thread memory pool of the current thread, for example, if the target memory block cannot be found in the memory block linked list of the target array index, it can be set by the designer according to practical scenarios and user needs. For example, a target memory block or a memory space with the applied memory size or a fixed size greater than the applied memory size can be directly applied for from remaining memory of the computing integrated circuit, so as to allocate all or part of the memory space applied for from the remaining memory of the computing integrated circuit to the current thread. In order to reduce the time of memory application and release, as shown in FIG. 2, a shared memory pool connected to each thread memory pool can also be set in the embodiment, so that when the memory space in each thread memory pool is insufficient, the memory can be applied for from the shared memory pool. Correspondingly, in the process of obtaining the target memory block from the thread memory pool of the current thread, the computing integrated circuit can determine whether the target memory block exists in the thread memory pool of the current thread; in response to determining that the target memory block exists in the thread memory pool of the current thread, the target memory block can be directly obtained from the thread memory pool; and in response to determining that the target memory block does not exist in the thread memory pool of the current thread, the mutex lock corresponding to the current thread of the shared memory pool is obtained, the target memory block is obtained from the shared memory pool, and the target memory block is allocated to the current thread through the thread memory pool of the current thread.

That is, as shown in FIG. 2, when each thread memory pool applies for memory, the thread memory management instance searches for idle memory blocks in the thread memory pool; in response to determining that an idle memory block is found in the thread memory pool, direct returning is performed; in response to determining that no idle memory blocks are found in the thread memory pool, the thread memory pool may apply for memory from the shared memory pool and return the memory to the thread memory management instance; and when releasing the memory, in response to determining that there are too many idle memory blocks in the thread memory pool, extra idle memory blocks can be returned to the shared memory pool.

Correspondingly, in the process of obtaining the target memory block from the shared memory pool, in the case where the target memory block does not exist in the shared memory pool, the target memory block or the memory space with the fixed size greater than the target memory block can be directly applied for from the remaining memory of the computing integrated circuit, so that all or part of the memory space applied for from the remaining memory of the computing integrated circuit can be allocated to the current thread. In order to reduce the time of memory application and release, as shown in FIG. 2, a page cache pool connected to the shared memory pool can also be set in the embodiment, so that when the memory space in the shared memory pool is insufficient, the memory can be applied for from the page cache pool. Correspondingly, the process of obtaining the target memory block from the shared memory pool can include: determining whether the target memory block exists in the shared memory pool; in response to determining that the target memory block exists in the shared memory pool, allocating the target memory block to the thread memory pool of the current thread; in response to determining that the target memory block does not exist in the shared memory pool, in the case where the target memory interval exists in the shared memory pool, obtaining the target memory block by dividing the target memory interval; and in the case where the target memory interval does not exist in the shared memory pool, obtaining a mutex lock corresponding to a current thread of a page cache pool, allocating a target page from the page cache pool to the shared memory pool, and taking the target page as the memory interval of the shared memory pool, where the target page is an idle preset page space corresponding to a memory size of the target memory block, and the target memory interval is any memory interval in the shared memory pool that is greater than or equal to the memory size of the target memory block.

That is, as shown in FIG. 2, the shared memory pool can be a memory pool shared by threads, and will be allocated from the shared memory pool only when there are no suitable memory blocks in each thread memory pool. If it is determined that there are no suitable idle memory blocks in the shared memory pool, the shared memory pool will apply for memory from the page cache pool, and the idle memory blocks applied for by the shared memory pool from the page cache pool are called "memory intervals (that is, target pages)". The memory interval is divided into small blocks (for example, target memory blocks) and provided to the thread memory pool. That is, after allocating the target page from the page cache pool to the shared memory pool, the shared memory pool can take a newly allocated target page as the target memory interval, and obtain the target memory block by dividing the target memory interval, and allocate the target memory block to the current thread through the thread memory pool. In response to determining that the small blocks in the same memory interval are subsequently returned to the shared memory pool, the memory interval is in an idle state, and at the same time, the memory interval can be returned to the page cache pool. Like the thread memory pool, the shared memory pool can also include an idle memory block array. Each element array element in the idle memory block array is a memory block linked list with the same size, and a corresponding relationship between an array index and the corresponding array element (the memory block linked list) is the same as that of the thread memory pool. That is, the shared memory pool can include preset memory blocks with various preset sizes, and the memory size (that is, the preset size) of each preset memory block in the shared memory pool can be the same as that of the preset memory block in the thread memory pool, which will not be repeated here. The target memory block can be an idle preset memory block with a preset size corresponding to the applied memory size of the memory application request transmitted from the shared memory pool to the thread memory pool of the current thread.

It should be noted that memory size specifications of the preset page space in the page cache pool can be set by the designer according to practical scenarios and user needs. For example, the page cache pool can include preset page spaces with one or more page space sizes (that is, the memory size specifications). For example, when the page cache pool includes the preset page spaces with various preset page space sizes, n preset page space sizes can include a preset memory page size to n preset memory page sizes in increments of the preset memory page size, where the preset memory page size can be a size of one memory page defined in the computing integrated circuit, for example, a memory page size of a Cambrian MLU370 integrated circuit (a computing integrated circuit) is 8KB. For example, the preset memory page size is 8KB, the number of preset memory pools (that is, memory pools in the memory allocator 1 and the memory allocator 2) is 2, and the use of the two preset memory pools is distinguished by 1 megabyte (MB), that is, when a second size threshold is 1MB, a value of n in the embodiment can be 128, that is, n can be a quotient of the second size threshold and the preset memory page size. The page cache pool can include an idle memory interval array, each element in the idle memory interval array is a memory interval linked list with the same size (that is, the preset memory page size). The corresponding relationship between the array index and the corresponding array element (the memory interval linked list) is shown in FIG. 5. The memory interval size in the array element corresponding to the index 1 is 1 page (that is, the preset memory page size), the memory interval size in the array element corresponding to the index 2 is 2 pages, and the memory interval size in the array element corresponding to the index 128 is 128 pages, that is, 128×8KB=1MB.

Correspondingly, the way of allocating the target page from the page cache pool to the shared memory pool can be set by the designer according to practical scenarios and user needs. For example, the target page can be an idle preset page space with a minimum page space size greater than or equal to the memory size of the target memory block, that is, the page space size of the target page can be fixed. That is, in response to determining that there is an idle preset page space with the target page space size in the page cache pool, the computing integrated circuit selects an idle preset page space with the target page space size as the target page, and allocates the target page to the shared memory pool, where the target page space size is the minimum page space size greater than or equal to the memory size of the target memory block. The target page can also be a minimum idle preset page space greater than or equal to the target memory block, that is, a minimum preset page space greater than or equal to the idle preset page space of the target memory block. That is, the page space size of the target page may not be fixed, and may change with the state of the idle preset page space. That is, in response to determining that there is an idle preset page space greater than or equal to the target memory block in the page cache pool, the computing integrated circuit selects an idle preset page space with the target page space size as the target page, and allocates the target page to the shared memory pool.

Further, in the process of allocating the target page from the page cache pool to the shared memory pool, in the case where the target page does not exist in the page cache pool, the memory space of the target memory block can be directly applied for from the remaining memory of the computing integrated circuit, so as to allocate the memory space applied for from the remaining memory of the computing integrated circuit to the current thread. It is also possible to apply for a memory space with a fixed size (that is, the preset memory application size) from the remaining memory of the computing integrated circuit, so as to allocate part of the memory space applied for from the remaining memory of the computing integrated circuit to the current thread. For example, the computing integrated circuit can determine whether there is an idle preset page space greater than or equal to the target memory block in the page cache pool; in response to determining that there is an idle preset page space greater than or equal to the target memory block in the page cache pool, a minimum idle preset page space greater than or equal to the target memory block is selected as the target page, and the target page is allocated to the shared memory pool; in response to determining that there is no idle preset page space greater than or equal to the target memory block in the page cache pool, a memory space with a preset memory application size is applied for from the remaining memory of the computing integrated circuit, the target memory block is divided from the memory space with the preset memory application size to the shared memory pool; and a remaining memory space in the memory space with the preset memory application size is put into the page cache pool, where the preset memory application size is greater than the memory size of the target memory block. For example, the preset memory application size can be greater than or equal to n preset memory page sizes, for example, n preset memory page sizes and the preset memory application size are the second size threshold (for example, 1MB). The preset memory application size can also be less than n preset memory page sizes, and the embodiment does not impose any restrictions as long as the preset memory application size is ensured to be greater than the memory size of the target memory block.

Correspondingly, before applying for the memory space with the preset memory application size from remaining memory of the computing integrated circuit, it can also be determined whether there are idle memory spaces greater than or equal to the target memory block in the page cache pool (that is, the previously divided memory space); in response to determining that there are idle memory spaces greater than or equal to the target memory block in the page cache pool, the smallest memory space in these memory spaces is selected to divide the target memory block into shared memory pools; and in response to determining that there is no idle memory space greater than or equal to the target memory block in the page cache pool, the above step of applying for the memory space with the preset memory application size from remaining memory of the computing integrated circuit is performed.

For example, when the shared memory pool applies for memory (that is, the target memory block) from the page cache pool, the page cache pool will search for a memory interval with a suitable size (for example, the target page) and return the memory interval to the shared memory pool. When searching for the target page, the page cache pool will convert the applied memory size (that is, the memory size of the target memory block) into an integer multiple of the memory page size (that is, the preset memory page size) (rounding up). For example, if m memory page sizes are needed eventually, the page cache pool will search for the memory interval (that is, the preset page space) from array elements with the index m in the idle memory interval array of the page cache pool; in response to determining that the idle memory interval array is not searched for from the array elements with the index m in the idle memory interval array of the page cache pool, then the memory interval is searched for from array elements with the index (m+1); in response to determining that the idle memory interval array is not searched for from the array elements with the index (m+1) in the idle memory interval array of the page cache pool, then the memory interval is searched for from array elements with the index (m+2); if the idle memory interval is still not found from the array elements with the index (m+1) to array elements with the index 128, the page cache pool will call a memory application function provided by the computing integrated circuit during the runtime to apply for a memory with a fixed size (that is, the preset memory application size, for example, 1MB); then the memory will be divided into a memory with the memory size applied by the shared memory pool and returned to the shared memory pool; and the remaining part after division will be put into the page cache pool as a new memory interval. In response to determining to release the memory, the shared memory pool may return the divided memory interval to the page cache pool, and the returned memory interval will be cached in the page cache pool for subsequent use.

Step 104, in response to determining that the target memory allocation mode is a second allocation mode, a mutex lock corresponding to a current thread of a target memory pool is obtained, and the memory space corresponding to the memory application request is allocated for the current thread by using the target memory pool, where the target memory pool is a preset memory pool corresponding to the applied memory size, and the applied memory size corresponding to the target memory pool is greater than an applied memory size corresponding to the thread memory pool.

It should be noted that the preset memory pool in the embodiment can be a memory pool used for processing memory application requests with relatively large applied memory sizes (for example, greater than the first size threshold). In the embodiment, the number of preset memory pools can be set by the designer according to usage scenarios and user needs. For example, the number of preset memory pools can be 1, that is, the target memory pool is a fixed preset memory pool; alternatively, the number of preset memory pools can also be a positive integer greater than 1, for example, 2 or 3, that is, the target memory pool can be any preset memory pool, so as to realize parallel processing of multiple memory application requests with relatively large applied memory sizes by setting a plurality of preset memory pools. As shown in FIG. 2, the number of preset memory pools can be 2, that is, the memory allocator 1 and the memory allocator 2 each have one memory pool (that is, the preset memory pool).

Correspondingly, when the number of preset memory pools is not 1, before obtaining the mutex lock corresponding to the current thread of the target memory pool, this step can further include: a process of determining the target memory pool, for example, determining the target memory pool based on a preset threshold range for selecting the preset memory pools. For example, when the number of preset memory pools is 2, that is, the preset memory pool includes the first memory pool and the second memory pool, the process of determining the target memory pool can include: determining whether the applied memory size of the memory application request is greater than a second size threshold (for example, 1MB in FIG. 2); in response to determining that the applied memory size of the memory application request is not greater than the second size threshold, determining the first memory pool as the target memory pool; or in response to determining that the applied memory size of the memory application request is greater than the second size threshold, determining the second memory pool as the target memory pool, where an applied memory size corresponding to the second memory pool is greater than an applied memory size corresponding to the first memory pool. As shown in FIG. 2, in response to determining that the applied memory size of the memory application request is less than or equal to 64KB (that is, the first size threshold), the memory application and release repeater determines the target memory allocation mode as the first allocation mode, so as to forward the memory application request to the memory allocator 1 for processing; in response to determining that the applied memory size of the memory application request is greater than 64KB, the memory application and release repeater determines the target memory allocation mode as the second allocation mode, in response to determining that the applied memory size of the memory application request is greater than 64KB and less than or equal to 1MB (that is, the second size threshold), the memory pool in the memory allocator 2 (that is, the first memory pool) is determined as the target memory pool, so as to forward the memory application request to the memory allocator 2 for processing; and in response to determining that the applied memory size of the memory application request is greater than 1MB, the memory pool in the memory allocator 3 (that is, the second memory pool) is determined as the target memory pool, so as to forward the memory application request to the memory allocator 3 for processing.

It can be understood that in this step, the way of obtaining, by the computing integrated circuit, the mutex lock corresponding to the current thread of the target memory pool and allocating the memory space corresponding to the memory application request for the current thread by using the target memory pool can be set by the designer according to practical scenarios and user needs. For example, in response to determining that there are idle memory blocks (that is, the memory space) in the target memory pool that are greater than or equal to the applied memory size, the computing integrated circuit allocates the smallest memory block in these memory blocks to the current thread; and in response to determining that there are no idle memory blocks in the target memory pool that are greater than or equal to the applied memory size, the memory space with the applied memory size is applied for from the remaining memory of the computing integrated circuit and allocate the memory space to the current thread. The computing integrated circuit can also determine the target memory size according to the applied memory size of the memory application request, where the target memory size is a product of a result of rounding up a quotient of the applied memory size of the memory application request and a third size threshold (for example, 512) and the third size threshold, that is, the target memory size is an integer multiple of the third size threshold; in response to determining that there are idle memory blocks (that is, the memory space) in the target memory pool that are greater than or equal to the target memory size, the smallest memory block in these memory blocks is allocated to the current thread; and in response to determining that there are no idle memory blocks in the target memory pool that are greater than or equal to the target memory size, the target memory size is applied for from the remaining memory of the computing integrated circuit and allocate the target memory size to the current thread.

Correspondingly, different preset memory pools can allocate memory space corresponding to the memory application request for the current thread in different ways. For example, when the preset memory pool includes the first memory pool and the second memory pool, and the target memory pool is the first memory pool, the process of allocating the memory space corresponding to the memory application request for the current thread by using the target memory pool can include: determining a target memory size according to the applied memory size of the memory application request; determining whether idle memory blocks greater than or equal to the target memory size exist in the target memory pool; in response to determining that the idle memory blocks greater than or equal to the target memory size exist in the target memory pool, allocating the smallest memory block in the idle memory blocks greater than or equal to the target memory size in the target memory pool to the current thread; in response to determining that the idle memory blocks greater than or equal to the target memory size do not exist in the target memory pool, determining whether a memory space with a target application size exists in remaining memory of the computing integrated circuit, where the target application size is a maximum value between a quotient of the remaining memory of the computing integrated circuit and a preset value (for example, 4) and the target memory size, and the preset value is greater than 1; and in response to determining that the memory space with the target application size exists in remaining memory of the computing integrated circuit, applying for the memory space with the target application size from the remaining memory of the computing integrated circuit, dividing a memory space with the target memory size from the memory space with the target application size and allocating the memory space with the target memory size to the current thread, and putting a remaining memory space (that is, the memory blocks) divided from the memory space with the target application size into the target memory pool.

Correspondingly, before dividing the memory space with the target memory size from the memory space with the target application size and allocating the memory space with the target memory size to the current thread, the method can include: determining whether a quotient of the target application size and the target memory size is greater than or equal to a third size threshold; in response to determining that the quotient of the target application size and the target memory size is less than the third size threshold, allocating the memory space with the target application size to the current thread; and in response to determining that the quotient of the target application size and the target memory size is greater than or equal to a third size threshold, dividing the memory space with target memory size from the memory space with the target application size and allocating the memory space with target memory size to the current thread, and putting the remaining memory space divided from the memory space with the target application size into the target memory pool.

As shown in FIG. 2, the memory allocator 2 can be responsible for the application and release of memory more than 64KB and less than 1MB. The memory allocator 2 can include a memory manager and a memory pool (that is, the first memory pool). In the process of memory application, the memory application request first passes through the memory manager, and the memory manager will round up the size of the applied memory to the third size threshold, that is, the memory application size becomes a multiple of 512, and the memory size (that is, the target memory size) is set to a. Then, the memory manager will search for idle memory blocks equal to or greater than a in the memory pool, in response to determining that an idle memory block equal to or greater than a is found in the memory pool, the idle memory block is returned; and in response to determining that the idle memory block equal to or greater than a is not found in the memory pool, the memory manager will call the memory application function during the runtime of the computing integrated circuit to apply for memory. The calculation method of the applied memory size is a maximum value between a and one quarter of the remaining memory of the computing integrated circuit (that is, the preset value is 4). In response to determining that the application fails due to insufficient remaining memory of the computing integrated circuit, the memory manager will release the previously applied idle complete memory blocks (that is, the complete memory space) cached in each memory pool (for example, the first memory pool, the second memory pool and the page cache pool) to the computing integrated circuit, and then reapply for memory. Finally, the memory manager will determine whether the memory size currently obtained minus a is greater than or equal to 512 bytes, in response to determining that the memory size currently obtained minus a is less than 512 bytes, the obtained memory is returned; and in response to determining that the memory size currently obtained minus a is greater than or equal to 512 bytes, the obtained memory is divided into two memory blocks, the size of the first memory block is a and the size of the second memory block is the remaining memory size; then, the first memory block is returned, and the second memory block is put into the memory pool.

Correspondingly, in the process of the memory release, a memory release request forwarded to the memory allocator 2 first passes through the memory manager. Parameters of the memory release request include a pointer to the memory (that is, a memory pointer), and the memory manager will search for the pointer in allocated memory blocks and return the memory block to the memory pool (that is, the first memory pool) after finding the memory block. Then, the memory manager will determine whether the memory block is a previously divided memory block, in response to determining that the memory block is the previously divided memory block, the previous memory block is recursively searched in the memory pool; in response to determining that the previous memory block exists in the memory pool, a plurality of memory blocks are merged into one memory block. Similarly, the next memory block is recursively searched in the memory pool, and in response to determining that the next memory block exists in the memory pool, the plurality of memory blocks are merged into one memory block until the divided memory blocks are released and can be merged into a complete memory block (that is, the complete memory space).

Correspondingly, in the process of applying for the memory space with the target application size from the remaining memory of the computing integrated circuit, it can be determined whether the memory space with the target application size exists in remaining memory of the computing integrated circuit; in response to determining that the memory space with the target application size does not exist in remaining memory of the computing integrated circuit, the first memory pool and the second memory pool (or the first memory pool, the second memory pool and the page cache pool) are controlled to release their respective complete memory spaces, where the complete memory space is a whole idle memory space previously applied to the computing integrated circuit; and in response to determining that the memory space with the target application size exists in remaining memory of the computing integrated circuit, the memory space with the target application size of the computing integrated circuit is applied.

Similarly, in the process of applying for the memory space with the preset memory application size from remaining memory of the computing integrated circuit, it can be determined whether the memory space with the preset memory application size exists in remaining memory of the computing integrated circuit; in response to determining that the memory space with the preset memory application size does not exist in remaining memory of the computing integrated circuit, each preset memory pool and page cache pool are controlled to release their respective complete memory spaces; and in response to determining that the memory space with the preset memory application size exists in remaining memory of the computing integrated circuit, the memory space with the preset memory application size of the computing integrated circuit is applied.

Correspondingly, when the target memory pool is the second memory pool, the process of allocating the memory space corresponding to the memory application request for the current thread by using the target memory pool can include: determining whether idle memory blocks greater than or equal to the target memory size exist in the target memory pool; in response to determining that the idle memory blocks greater than or equal to the target memory size exist in the target memory pool, allocating the smallest memory block in the idle memory blocks greater than or equal to the target memory size in the target memory pool to the current thread; in response to determining that the idle memory blocks greater than or equal to the target memory size do not exist in the target memory pool, determining whether the memory space with the target memory size exists in remaining memory of the computing integrated circuit; in response to determining that the memory space with the target memory size does not exist in remaining memory of the computing integrated circuit, controlling the first memory pool and the second memory pool (or the first memory pool, the second memory pool and the page cache pool) to release their respective complete memory spaces, where the complete memory space is a whole idle memory space previously applied to the computing integrated circuit; in response to determining that the memory space with the target memory size exists in the remaining memory of the computing integrated circuit, applying for the remaining memory of the computing integrated circuit, and determining whether a difference between a memory size of the remaining memory and the target memory size is greater than or equal to the second size threshold; in response to determining that the difference between the memory size of the remaining memory and the target memory size is greater than or equal to the second size threshold, dividing the memory space with the target memory size from the remaining memory and allocating the memory space with the target memory size to the current thread, and putting a remaining memory space divided from the remaining memory into the target memory pool; or in response to determining that the difference between the memory size of the remaining memory and the target memory size is less than the second size threshold, allocating the remaining memory to the current thread.

As shown in FIG. 2, the memory allocator 3 can be responsible for the application and release of memory more than 1MB. In the process of memory application, the memory application request first passes through the memory manager, and the memory manager will round up the size of the applied memory to 512, that is, the memory application size becomes a multiple of 512, and the memory size (that is, the target memory size) is set to a. Then, the memory manager will search for idle memory blocks equal to or greater than a in the memory pool, in response to determining that an idle memory block equal to or greater than a is found in the memory pool, the idle memory block is returned; and in response to determining that the idle memory block equal to or greater than a is not found in the memory pool, the memory manager will call the memory application function during the runtime of the computing integrated circuit to apply for memory. In response to determining that the application fails due to insufficient remaining memory of the computing integrated circuit, the memory manager will release the previously applied idle complete memory blocks (that is, the complete memory space) cached in each memory pool (for example, the first memory pool, the second memory pool and the page cache pool) to the computing integrated circuit. Finally, the memory manager will determine whether the memory size currently obtained minus a is greater than or equal to 1MB (that is, the second size threshold), in response to determining that the memory size currently obtained minus a is less than 1MB, the obtained memory is returned; and in response to determining that the memory size currently obtained minus a is greater than or equal to 1MB, the obtained memory is divided into two memory blocks, the size of the first memory block is a and the size of the second memory block is the remaining memory size; then, the first memory block is returned, and the second memory block is put into the memory pool.

Correspondingly, in the process of the memory release, a memory release request forwarded to the memory allocator 3 first passes through the memory manager. Parameters of the memory release request include a pointer to the memory, and the memory manager will search for the pointer in allocated memory blocks and return the memory block to the memory pool (that is, the second memory pool) after finding the memory block. Then, the memory manager will determine whether the memory block is a previously divided memory block, in response to determining that the memory block is the previously divided memory block, the previous memory block is recursively searched in the memory pool; in response to determining that the previous memory block exists in the memory pool, a plurality of memory blocks are merged into one memory block. Similarly, the next memory block is recursively searched in the memory pool, and in response to determining that the next memory block exists in the memory pool, the plurality of memory blocks are merged into one memory block until the divided memory blocks are released and can be merged into a complete memory block (that is, the complete memory space).

In the embodiments of the present disclosure, by setting the preset memory pool and the thread memory pool of each thread, memory requests with a relatively small memory may be processed by the thread memory pool of each thread without obtaining the mutex lock, thereby reducing the time for memory application and release of the computing integrated circuit, and improving the performance of memory application and release of the computing integrated circuit. In addition, memory requests with a relatively large memory are processed by using the preset memory pool with the mutex lock, and only the memory requests with a relatively small memory is processed by using the thread memory pool, thereby reducing the waste of memory resources in the computing integrated circuit.

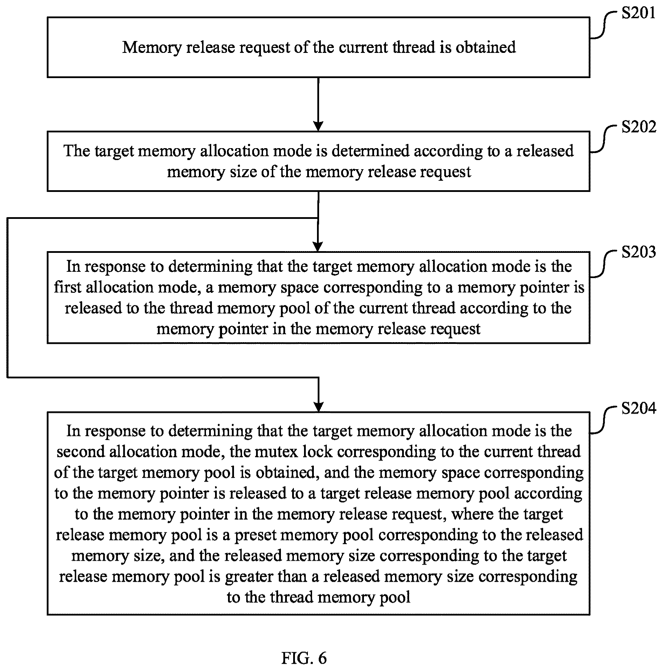

Based on the above embodiments, the present disclosure further provides a memory management method for a memory release process of a computing integrated circuit. In some embodiments, referring to FIG. 6, FIG. 6 is a flowchart of another memory management method for a computing integrated circuit provided in an embodiment of the present disclosure. The method can include following steps.

Step 201, a memory release request of the current thread is obtained.

The memory release request in the embodiment can be a request for a thread to release memory.

Step 202, the target memory allocation mode is determined according to a released memory size of the memory release request.

It can be understood that the released memory size in the embodiment can be a memory size released by the memory release request. The target memory allocation mode in the embodiment can be a memory allocation mode used for processing the memory release request. The target memory allocation mode can be a first allocation mode using a thread memory pool of a current thread for processing or a second allocation mode using a target memory pool for processing.

Step 203, in response to determining that the target memory allocation mode is the first allocation mode, a memory space corresponding to a memory pointer is released to the thread memory pool of the current thread according to the memory pointer in the memory release request.

Correspondingly, as shown in FIG. 2, after releasing the memory space corresponding to the memory pointer to the thread memory pool of the current thread, it can be determined whether the memory space is the memory space (that is, the above target memory block) previously obtained from the shared memory pool; and the memory space is released to the shared memory pool in response to determining that the memory space is the memory space previously obtained from the shared memory pool.

Correspondingly, after releasing the memory space to the shared memory pool, it can also be determined whether the memory space is a divided memory space; in response to determining that the memory space is the divided memory space, idle memory spaces adjacent to the memory space are recursively searched and merged in the shared memory pool to obtain a complete memory space (for example, the above target page) obtained from a page cache area, and after obtaining the complete memory space obtained from the page cache area, the complete memory space is released to the page cache area. After the complete memory space is released to the page cache area, it can also be determined whether the memory space released to the page cache area is the divided memory space; in response to determining that the memory space released to the page cache area is the divided memory space, idle memory spaces adjacent to the divided memory space are recursively searched and merged in the page cache area to obtain a complete memory space (for example, the above complete memory space) previously applied for from the computing integrated circuit; and in response to determining that remaining memory of the computing integrated circuit is insufficient, the complete memory space is returned to the computing integrated circuit.

Step 204, in response to determining that the target memory allocation mode is the second allocation mode, the mutex lock corresponding to the current thread of the target memory pool is obtained, and the memory space corresponding to the memory pointer is released to a target release memory pool according to the memory pointer in the memory release request, where the target release memory pool is a preset memory pool corresponding to the released memory size, and the released memory size corresponding to the target release memory pool is greater than a released memory size corresponding to the thread memory pool.

It can be understood that the memory management method for the memory release process provided in the embodiment can be implemented in a manner corresponding to the memory management method for the memory application process provided in the previous embodiment, and the embodiment does not impose any restrictions on this.

Correspondingly, in the embodiment, after the computing integrated circuit releases the memory space corresponding to the memory pointer to the target release memory pool (for example, a memory pool in a memory allocator 1 or 2 in FIG. 2), the method further includes: determining whether the memory space corresponding to the memory pointer in the target release memory pool is a divided memory space; in response to determining that the memory space corresponding to the memory pointer in the target release memory pool is the divided memory space, recursively searching and merging idle memory spaces adjacent to the memory space corresponding to the memory pointer in the target release memory pool to obtain the complete memory space (for example, the above complete memory space) previously applied for from the computing integrated circuit ; and in response to determining that remaining memory of the computing integrated circuit is insufficient, returning the complete memory space to the computing integrated circuit.

Corresponding to the above method embodiments, embodiments of the present disclosure further provide a memory management apparatus for a computing integrated circuit. The memory management apparatus for the computing integrated circuit described below and the memory management method for the computing integrated circuit described above can be referenced correspondingly.

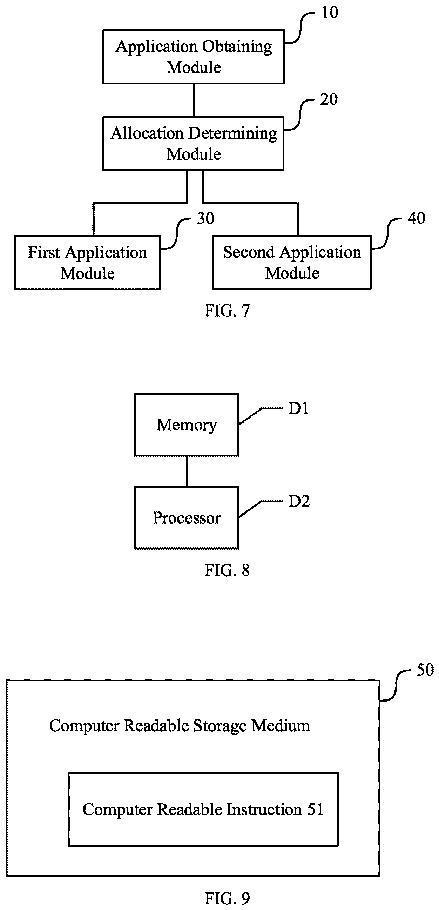

Referring to FIG. 7, FIG. 7 is a structural block diagram of a memory management apparatus for a computing integrated circuit provided in an embodiment of the present disclosure. The apparatus can include:
an application obtaining module 10 configured to obtain a memory application request of a current thread, where the current thread is any thread of a computing integrated circuit;
an allocation determining module 20 configured to determine a target memory allocation mode according to an applied memory size of the memory application request;
a first application module 30 configured to, in response to determining that the target memory allocation mode is a first allocation mode, allocate a memory space corresponding to the memory application request for the current thread by using a thread memory pool of the current thread; or
a second application module 40 configured to, in response to determining that the target memory allocation mode is a second allocation mode, obtain a mutex lock corresponding to a current thread of a target memory pool, and allocate the memory space corresponding to the memory application request for the current thread by using the target memory pool, where the target memory pool is a preset memory pool corresponding to the applied memory size, and the applied memory size corresponding to the target memory pool is greater than an applied memory size corresponding to the thread memory pool.

In some embodiments, the first application module 30 can be configured to obtain a target memory block from the thread memory pool of the current thread, where the target memory block is an idle preset memory block corresponding to the applied memory size of the memory application request; and allocate the target memory block to the current thread.

In some embodiments, the first application module 30 can be configured to obtain the target memory block from the thread memory pool of the current thread by using a thread memory management instance of the current thread; and allocate the target memory block to the current thread.

In some embodiments, the thread memory pool of the current thread includes preset memory blocks with various preset sizes, and the target memory block is an idle preset memory block with a preset size corresponding to the applied memory size of the memory application request in the thread memory pool of the current thread.

In some embodiments, the first application module 30 can be configured to determine a target array index according to the applied memory size of the memory application request, where the thread memory pool of the current thread includes an idle memory block array, the idle memory block array includes array elements with array indexes corresponding to the various preset sizes, each of the array elements is a memory block linked list of the idle preset memory block with the preset size corresponding to the array index of the array element, and the target array index is any array index corresponding to the preset size; and search the target memory block from the memory block linked list of the target array index.

In some embodiments, the first application module 30 can include:
a thread memory pool judging submodule configured to determine whether the target memory block exists in the thread memory pool of the current thread; and
a shared memory pool obtaining submodule configured to, in response to determining that the target memory block does not exist in the thread memory pool of the current thread, obtain a mutex lock corresponding to a current thread of a shared memory pool, and obtain the target memory block from the shared memory pool.

In some embodiments, the shared memory pool obtaining submodule can include:
a shared memory pool judging unit configured to determine whether the target memory block exists in the shared memory pool;
a shared memory pool obtaining unit configured to, in response to determining that the target memory block does not exist in the shared memory pool and the target memory interval exists in the shared memory pool, obtain the target memory block by dividing the target memory interval; or in response to determining that the target memory interval does not exist in the shared memory pool, obtain a mutex lock corresponding to a current thread of a page cache pool, allocate a target page from the page cache pool to the shared memory pool, and take the target page as the memory interval of the shared memory pool, where the target page is an idle preset page space corresponding to a memory size of the target memory block, and the target memory interval is any memory interval in the shared memory pool that is greater than or equal to the memory size of the target memory block.

In some embodiments, the page cache pool includes preset page spaces with multiple preset page space sizes, the preset page space sizes include the preset memory page size to n preset memory page sizes in increments of the preset memory page size, and the shared memory pool obtaining unit can include:
a page cache pool judging subunit configured to determine whether idle preset page spaces greater than or equal to the target memory block exist in the page cache pool;
a page cache pool allocation subunit configured to, in response to determining that the idle preset page spaces greater than or equal to the target memory block exist in the page cache pool, select a minimum idle preset page space greater than or equal to the target memory block as the target page, and allocate the target page to the shared memory pool; or
a page cache pool application subunit configured to, in response to determining that the idle preset page spaces greater than or equal to the target memory block do not exist in the page cache pool, apply for a memory space with a preset memory application size from remaining memory of the computing integrated circuit, divide the target memory block from the memory space with the preset memory application size to the shared memory pool, and put a remaining memory space in the memory space with the preset memory application size into the page cache pool, where the preset memory application size is greater than or equal to the n preset memory page sizes.

In some embodiments, the preset sizes include 8 bytes to 128 bytes in increments of 8 bytes, 144 bytes to 1024 bytes in increments of 16 bytes, 1152 bytes to 8192 bytes in increments of 128 bytes, and 9216 bytes to 65536 bytes in increments of 1024 bytes, and the allocation determining module 20 can be configured to determine whether the applied memory size of the memory application request is greater than a first size threshold, where the first size threshold is 65536 bytes; in response to determining that the applied memory size of the memory application request is not greater than the first size threshold, determine that the target memory allocation mode is the first allocation mode; or in response to determining that the applied memory size of the memory application request is greater than the first size threshold, determine that the target memory allocation mode is the second allocation mode.

In some embodiments, the preset memory pool includes a first memory pool and a second memory pool, and the second application module 40 can include:
a storage pool determining submodule configured to determine whether the applied memory size of the memory application request is greater than a second size threshold; in response to determining that the applied memory size of the memory application request is not greater than the second size threshold, determine the first memory pool as the target memory pool; or in response to determining that the applied memory size of the memory application request is greater than the second size threshold, determine the second memory pool as the target memory pool, where an applied memory size corresponding to the second memory pool is greater than an applied memory size corresponding to the first memory pool.

In some embodiments, in the case where the target memory pool is the first memory pool, the second application module 40 can include:
a first determining submodule configured to determine a target memory size according to the applied memory size of the memory application request, where the target memory size is a product of a result of rounding up a quotient of the applied memory size of the memory application request and a third size threshold and the third size threshold;
a first judging submodule configured to determine whether idle memory blocks greater than or equal to the target memory size exist in the target memory pool;
a first allocation submodule configured to, in response to determining that the idle memory blocks greater than or equal to the target memory size exist in the target memory pool, allocate the smallest memory block in the idle memory blocks greater than or equal to the target memory size in the target memory pool to the current thread;
a second judging submodule configured to, in response to determining that the idle memory blocks greater than or equal to the target memory size do not exist in the target memory pool, determine whether a memory space with a target application size exists in remaining memory of the computing integrated circuit, where the target application size is a maximum value between a quotient of the remaining memory of the computing integrated circuit and a preset value and the target memory size, and the preset value is greater than 1; and
a second allocation submodule configured to, in response to determining that the memory space with the target application size exists in remaining memory of the computing integrated circuit, apply for the memory space with the target application size from the remaining memory of the computing integrated circuit, divide a memory space with the target memory size from the memory space with the target application size and allocate the memory space with the target memory size to the current thread, and put a remaining memory space divided from the memory space with the target application size into the target memory pool.

In some embodiments, in the case where the target memory pool is the second memory pool, the second application module 40 can include:
a third judging submodule configured to determine whether idle memory blocks greater than or equal to the target memory size exist in the target memory pool;
a third allocation submodule configured to, in response to determining that the idle memory blocks greater than or equal to the target memory size exist in the target memory pool, allocate the smallest memory block in the idle memory blocks greater than or equal to the target memory size in the target memory pool to the current thread;
a fourth judging submodule configured to, in response to determining that the idle memory blocks greater than or equal to the target memory size do not exist in the target memory pool, determine whether the memory space with the target memory size exists in remaining memory of the computing integrated circuit;
a release submodule configured to, in response to determining that the memory space with the target memory size does not exist in remaining memory of the computing integrated circuit, control the first memory pool and the second memory pool to release their respective complete memory spaces, where the complete memory space is a whole idle memory space previously applied to the computing integrated circuit;
a fifth judging submodule configured to, in response to determining that the memory space with the target memory size exists in the remaining memory of the computing integrated circuit, apply for the remaining memory of the computing integrated circuit, and determine whether a difference between a memory size of the remaining memory and the target memory size is greater than or equal to the second size threshold;
a fourth allocation submodule configured to, in response to determining that the difference between the memory size of the remaining memory and the target memory size is greater than or equal to the second size threshold, divide the memory space with the target memory size from the remaining memory and allocate the memory space with the target memory size to the current thread, and put a remaining memory space divided from the remaining memory into the target memory pool; or
a fifth allocation submodule configured to, in response to determining that the difference between the memory size of the remaining memory and the target memory size is less than the second size threshold, allocate the remaining memory to the current thread.

In some embodiments, the apparatus further includes:
a release obtaining module configured to obtain a memory release request of the current thread;
a release determining module configured to determine the target memory allocation mode according to a released memory size of the memory release request;
a first release module configured to, in response to determining that the target memory allocation mode is the first allocation mode, release a memory space corresponding to a memory pointer to the thread memory pool of the current thread according to the memory pointer in the memory release request; or
a second release module configured to, in response to determining that the target memory allocation mode is the second allocation mode, obtain the mutex lock corresponding to the current thread of the target memory pool, and release the memory space corresponding to the memory pointer to a target release memory pool according to the memory pointer in the memory release request , where the target release memory pool is a preset memory pool corresponding to the released memory size, and the released memory size corresponding to the target release memory pool is greater than a released memory size corresponding to the thread memory pool.

In some embodiments, the second release module can further be configured to determine whether the memory space corresponding to the memory pointer in the target release memory pool is a divided memory space after releasing the memory space corresponding to the memory pointer to the target release memory pool; and in response to determining that the memory space corresponding to the memory pointer in the target release memory pool is the divided memory space, recursively search and merge idle memory spaces adjacent to the memory space corresponding to the memory pointer in the target release memory pool.

In the embodiments of the present disclosure, by setting the preset memory pool and the thread memory pool of each thread, memory requests with a relatively small memory may be processed by the thread memory pool of each thread without obtaining the mutex lock, thereby reducing the time for memory application and release of the computing integrated circuit, and improving the performance of memory application and release of the computing integrated circuit. In addition, memory requests with a relatively large memory are processed by using the preset memory pool with the mutex lock, and only the memory requests with a relatively small memory is processed by using the thread memory pool, thereby reducing the waste of memory resources in the computing integrated circuit.

Corresponding to the above method embodiments, embodiments of the present disclosure further provide a computing integrated circuit. The computing integrated circuit described below and the memory management method for the computing integrated circuit described above can be referenced correspondingly.

Referring to FIG. 8, FIG. 8 is a schematic structural diagram of a computing integrated circuit provided in an embodiment of the present disclosure. The computing integrated circuit can include one or more processors D2; and a memory D1 associated with the one or more processors. The memory is configured to store computer readable instructions which, when read and executed by the one or more processors, cause the one or more processors to implement steps of the memory management method for the computing integrated circuit provided in the above method embodiments.

Corresponding to the above method embodiments, embodiments of the present disclosure further provide a computer readable storage medium. The computer readable storage medium described below and the memory management method for the computing integrated circuit described above can be referenced correspondingly.

Referring to FIG. 9, FIG. 9 is a schematic structural diagram of a computer readable storage medium provided in an embodiment of the present disclosure. The computer readable storage medium 50 stores computer readable instructions 51 which, when executed by a processor, cause the processor to implement steps of the memory management method for the computing integrated circuit provided in the above method embodiments.

In some embodiments, the computer readable storage medium 50 is a non-transitory computer readable storage medium. The computer readable storage medium 50 can be various storage media that can store program codes, for example, a USB flash disk, a mobile hard disk, a read only memory (ROM), a random access memory (RAM), a magnetic disk, or an optical disk.

The embodiments in the description are described in a progressive manner, each of the embodiments emphatically describes the differences from the other embodiments, and the same or similar parts of the embodiments may refer to each other. As for the apparatus, the computing integrated circuit and the computer readable storage medium disclosed in the embodiments, since it corresponds to the method disclosed in the embodiments, the description thereof is relatively simple, and the related parts may refer to the description on the methods.

The system, the method, the apparatus and the device for detecting power consumption of the server, and the non-transitory readable storage medium provided in the embodiments of the present disclosure are described in detail above. The principle and the embodiments of the present disclosure are described herein with reference to the specific examples, and the description of the above embodiments is only used to help understand the method of the present disclosure and the core concept thereof. It should be noted that a person skilled in the art may make improvements and modifications on the present disclosure without departing from the principle of the present disclosure, and these improvements and modifications fall within the protection scope of the claims of the present disclosure.

## Claims

1. A memory management method for a computing integrated circuit, comprising:
obtaining a memory application request of a current thread, wherein the current thread is any thread of a computing integrated circuit;
determining a target memory allocation mode according to an applied memory size of the memory application request;
in response to determining that the target memory allocation mode is a first allocation mode, allocating a memory space corresponding to the memory application request for the current thread by using a thread memory pool of the current thread, wherein the computing integrated circuit is provided with a thread memory pool for each thread; or
in response to determining that the target memory allocation mode is a second allocation mode, obtaining a mutex lock corresponding to a current thread of a target memory pool, and allocating the memory space corresponding to the memory application request for the current thread by using the target memory pool, wherein the target memory pool is a preset memory pool corresponding to the applied memory size, and the applied memory size corresponding to the target memory pool is greater than an applied memory size corresponding to the thread memory pool.

2. The memory management method for the computing integrated circuit according to claim 1, wherein allocating the memory space corresponding to the memory application request for the current thread by using the thread memory pool of the current thread comprises:
obtaining a target memory block from the thread memory pool of the current thread, wherein the target memory block is an idle preset memory block corresponding to the applied memory size of the memory application request; and
allocating the target memory block to the current thread.

3. The memory management method for the computing integrated circuit according to claim 2, wherein obtaining the target memory block from the thread memory pool of the current thread comprises:
obtaining the target memory block from the thread memory pool of the current thread by using a thread memory management instance of the current thread.

4. The memory management method for the computing integrated circuit according to claim 2, wherein the thread memory pool of the current thread comprises preset memory blocks with various preset sizes, and the target memory block is an idle preset memory block with a preset size corresponding to the applied memory size of the memory application request in the thread memory pool of the current thread.

5. The memory management method for the computing integrated circuit according to claim 4, wherein obtaining the target memory block from the thread memory pool of the current thread comprises:
determining a target array index according to the applied memory size of the memory application request, wherein the thread memory pool of the current thread comprises an idle memory block array, the idle memory block array comprises array elements with array indexes corresponding to the various preset sizes, each of the array elements is a memory block linked list of the idle preset memory block with the preset size corresponding to the array index of the array element, and the target array index is any array index corresponding to the preset size; and
searching the target memory block from the memory block linked list of the target array index.

6. The memory management method for the computing integrated circuit according to claim 4, wherein obtaining the target memory block from the thread memory pool of the current thread comprises:
determining whether the target memory block exists in the thread memory pool of the current thread; and
in response to determining that the target memory block does not exist in the thread memory pool of the current thread, obtaining a mutex lock corresponding to a current thread of a shared memory pool, and obtaining the target memory block from the shared memory pool.

7. The memory management method for the computing integrated circuit according to claim 6, wherein obtaining the target memory block from the shared memory pool comprises:
determining whether the target memory block exists in the shared memory pool;
in response to determining that the target memory block does not exist in the shared memory pool, determining whether a target memory interval exists in the shared memory pool;
in response to determining that the target memory interval exists in the shared memory pool, obtaining the target memory block by dividing the target memory interval; or
in response to determining that the target memory interval does not exist in the shared memory pool, obtaining a mutex lock corresponding to a current thread of a page cache pool, allocating a target page from the page cache pool to the shared memory pool, and taking the target page as the memory interval of the shared memory pool, wherein the target page is an idle preset page space corresponding to a memory size of the target memory block, and the target memory interval is any memory interval in the shared memory pool that is greater than or equal to the memory size of the target memory block.

8. The memory management method for the computing integrated circuit according to claim 7, wherein the page cache pool comprises preset page spaces with multiple preset page space sizes, the preset page space sizes comprise the preset memory page size to n preset memory page sizes in increments of the preset memory page size, and allocating the target page from the page cache pool to the shared memory pool comprises:
determining whether idle preset page spaces greater than or equal to the target memory block exist in the page cache pool;
in response to determining that the idle preset page spaces greater than or equal to the target memory block exist in the page cache pool, selecting a minimum idle preset page space greater than or equal to the target memory block as the target page, and allocating the target page to the shared memory pool; or
in response to determining that the idle preset page spaces greater than or equal to the target memory block do not exist in the page cache pool, applying for a memory space with a preset memory application size from remaining memory of the computing integrated circuit, dividing the target memory block from the memory space with the preset memory application size to the shared memory pool, and putting a remaining memory space in the memory space with the preset memory application size into the page cache pool, wherein the preset memory application size is greater than or equal to the n preset memory page sizes.

9. The memory management method for the computing integrated circuit according to claim 4, wherein the preset sizes comprise 8 bytes to 128 bytes in increments of 8 bytes, 144 bytes to 1024 bytes in increments of 16 bytes, 1152 bytes to 8192 bytes in increments of 128 bytes, and 9216 bytes to 65536 bytes in increments of 1024 bytes, and determining the target memory allocation mode according to the applied memory size of the memory application request comprises:
determining whether the applied memory size of the memory application request is greater than a first size threshold, wherein the first size threshold is 65536 bytes;
in response to determining that the applied memory size of the memory application request is not greater than the first size threshold, determining that the target memory allocation mode is the first allocation mode; or
in response to determining that the applied memory size of the memory application request is greater than the first size threshold, determining that the target memory allocation mode is the second allocation mode.

10. The memory management method for the computing integrated circuit according to claim 1, wherein the preset memory pool comprises a first memory pool and a second memory pool, and before obtaining the mutex lock corresponding to the current thread of the target memory pool, the method further comprises:
determining whether the applied memory size of the memory application request is greater than a second size threshold;
in response to determining that the applied memory size of the memory application request is not greater than the second size threshold, determining the first memory pool as the target memory pool; or
in response to determining that the applied memory size of the memory application request is greater than the second size threshold, determining the second memory pool as the target memory pool, wherein an applied memory size corresponding to the second memory pool is greater than an applied memory size corresponding to the first memory pool.

11. The memory management method for the computing integrated circuit according to claim 10, wherein in the case where the target memory pool is the first memory pool, allocating the memory space corresponding to the memory application request for the current thread by using the target memory pool comprises:
determining a target memory size according to the applied memory size of the memory application request, wherein the target memory size is a product of a result of rounding up a quotient of the applied memory size of the memory application request and a third size threshold and the third size threshold;
determining whether idle memory blocks greater than or equal to the target memory size exist in the target memory pool;
in response to determining that the idle memory blocks greater than or equal to the target memory size exist in the target memory pool, allocating the smallest memory block in the idle memory blocks greater than or equal to the target memory size in the target memory pool to the current thread;
in response to determining that the idle memory blocks greater than or equal to the target memory size do not exist in the target memory pool, determining whether a memory space with a target application size exists in remaining memory of the computing integrated circuit, wherein the target application size is a maximum value between a quotient of the remaining memory of the computing integrated circuit and a preset value and the target memory size, and the preset value is greater than 1; and
in response to determining that the memory space with the target application size exists in remaining memory of the computing integrated circuit, applying for the memory space with the target application size from the remaining memory of the computing integrated circuit, dividing a memory space with the target memory size from the memory space with the target application size and allocating the memory space with the target memory size to the current thread, and putting a remaining memory space divided from the memory space with the target application size into the target memory pool.

12. The memory management method for the computing integrated circuit according to claim 11, wherein in the case where the target memory pool is the second memory pool, allocating the memory space corresponding to the memory application request for the current thread by using the target memory pool comprises:
determining whether idle memory blocks greater than or equal to the target memory size exist in the target memory pool;
in response to determining that the idle memory blocks greater than or equal to the target memory size exist in the target memory pool, allocating the smallest memory block in the idle memory blocks greater than or equal to the target memory size in the target memory pool to the current thread;
in response to determining that the idle memory blocks greater than or equal to the target memory size do not exist in the target memory pool, determining whether the memory space with the target memory size exists in remaining memory of the computing integrated circuit in response to determining that the idle memory blocks greater than or equal to the target memory size do not exist in the target memory pool;
in response to determining that the memory space with the target memory size does not exist in remaining memory of the computing integrated circuit, controlling the first memory pool and the second memory pool to release their respective complete memory spaces, wherein the complete memory space is a whole idle memory space previously applied to the computing integrated circuit;
in response to determining that the memory space with the target memory size exists in the remaining memory of the computing integrated circuit, applying for the remaining memory of the computing integrated circuit, and determining whether a difference between a memory size of the remaining memory and the target memory size is greater than or equal to the second size threshold;
in response to determining that the difference between the memory size of the remaining memory and the target memory size is greater than or equal to the second size threshold, dividing the memory space with the target memory size from the remaining memory and allocating the memory space with the target memory size to the current thread, and putting a remaining memory space divided from the remaining memory into the target memory pool; or
in response to determining that the difference between the memory size of the remaining memory and the target memory size is less than the second size threshold, allocating the remaining memory to the current thread.

13. The memory management method for the computing integrated circuit according to any one of claims 1 to 12, further comprising:
obtaining a memory release request of the current thread;
determining the target memory allocation mode according to a released memory size of the memory release request;
in response to determining that the target memory allocation mode is the first allocation mode, releasing a memory space corresponding to a memory pointer to the thread memory pool of the current thread according to the memory pointer in the memory release request, wherein the computing integrated circuit is provided with a thread memory pool for each thread; or
in response to determining that the target memory allocation mode is the second allocation mode, obtaining the mutex lock corresponding to the current thread of the target memory pool, and releasing the memory space corresponding to the memory pointer to a target release memory pool according to the memory pointer in the memory release request, wherein the target release memory pool is a preset memory pool corresponding to the released memory size, and the released memory size corresponding to the target release memory pool is greater than a released memory size corresponding to the thread memory pool.

14. The memory management method for the computing integrated circuit according to claim 13, wherein after releasing the memory space corresponding to the memory pointer to the target release memory pool, the method further comprises:
determining whether the memory space corresponding to the memory pointer in the target release memory pool is a divided memory space; and
in response to determining that the memory space corresponding to the memory pointer in the target release memory pool is the divided memory space, recursively searching and merging idle memory spaces adjacent to the memory space corresponding to the memory pointer in the target release memory pool.

15. The memory management method for the computing integrated circuit according to claim 13, wherein after the step of obtaining the memory release request of the current thread, the method further comprises:
releasing a memory of the current thread through a thread memory management instance of the current thread.

16. The memory management method for the computing integrated circuit according to claim 15, wherein the step of releasing the memory of the current thread through the thread memory management instance of the current thread comprises:
determining whether a number of idle memory blocks in the thread memory pool corresponding to the current thread exceeds a preset number; and
in response to the number of idle memory blocks in the thread memory pool corresponding to the current thread exceeding the preset number, returning one or more preset idle memory blocks to the shared memory pool.

17. The memory management method for the computing integrated circuit according to claim 1, wherein after determining the target memory allocation mode according to the applied memory size of the memory application request, the method further comprises:
forwarding the target memory allocation mode to a corresponding memory allocator to enable a thread memory pool in the corresponding memory allocator to process the memory application request.

18. The memory management method for the computing integrated circuit according to claim 6, wherein obtaining the target memory block from the shared memory pool comprises:
determining whether the target memory block exists in the shared memory pool; and
in response to determining that the target memory block does not exist in the shared memory pool, obtaining the target memory block through the page cache pool.

19. A memory management apparatus for a computing integrated circuit, comprising:
an application obtaining module configured to obtain a memory application request of a current thread, wherein the current thread is any thread of a computing integrated circuit;
an allocation determining module configured to determine a target memory allocation mode according to an applied memory size of the memory application request;
a first application module configured to, in response to determining that the target memory allocation mode is a first allocation mode, allocate a memory space corresponding to the memory application request for the current thread by using a thread memory pool of the current thread; or
a second application module configured to, in response to determining that the target memory allocation mode is a second allocation mode, obtain a mutex lock corresponding to a current thread of a target memory pool, and allocate the memory space corresponding to the memory application request for the current thread by using the target memory pool, wherein the target memory pool is a preset memory pool corresponding to the applied memory size, and the applied memory size corresponding to the target memory pool is greater than an applied memory size corresponding to the thread memory pool.

20. A computing integrated circuit, comprising:
one or more processors; and
a memory associated with the one or more processors, wherein the memory is configured to store computer readable instructions which, when read and executed by the one or more processors, cause the one or more processors to implement steps of a memory management method for a computing integrated circuit according to any one of claims 1 to 18.
